# EUROPÄISCHE PATENTSCHRIFT

(11) **EP 1 836 888 B1**
(45) Veröffentlichungstag und Bekanntmachung des Hinweises auf die Patenterteilung: **15.04.2009**
(21) Anmeldenummer: 07003952.4
(22) Anmeldetag: 27.02.2007
(51) Int. Cl.: A01C 17/00

(54) **Schleuderdüngerstreuer**
Centrifugal fertilizer spreader
Epandeur centrifuge pour engrais

(30) Priorität: 06.03.2006 DE 102006010592
(43) Veröffentlichungstag der Anmeldung: 26.09.2007
(73) Patentinhaber: Amazonen-Werke H. Dreyer GmbH & Co. KG, 49205 Hasbergen (DE)
(72) Erfinder: Krabbe, Ulrich, 49205 Hasbergen (DE); Dieckmann, Ralf, 49492 Westerkappeln (DE)

(56) Entgegenhaltungen:
- EP-A1- 0 796 554
- EP-A1- 0 981 939
- EP-A1- 1 504 645
- US-A- 1 166 476

## Beschreibung

Die Erfindung betrifft einen Schleuderdüngerstreuer gemäß des Oberbegriffes des Patentanspruches 1.

Ein derartiger Schleuderdüngerstreuer ist in der EP 07 96 554 B1 beschrieben. Dieser Schleuderdüngerstreuer weist einen Vorratsbehälter auf, unter dem eine umlaufende mit Wurfflügeln bestückte Schleuderscheibe angeordnet ist. Diese Wurfflügel weisen eine sich in aufrechter Richtung erstreckende Rückwand und eine sich an die Oberkante der Rückwand anschließende und in Umlaufrichtung weisende Leitfläche auf, wobei die Leitfläche nicht über das radiale Ende der Rückwand hinaus ragt.

Der Vorratsbehälter weist in seinem unteren Bereich ein Dosierorgan auf, über welches der Schleuderscheibe das zu verteilende Streugut, wie Dünger und Streusalz zugeführt und von den Wurfflügeln erfasst und in Breitverteilung auf der Streufläche verteilt wird.

Während der Streuarbeit entstehen durch die Wurfflügel Luftverwirbelungen außerhalb des von den Wurfflügeln überstrichenen Bereiches. Durch diese Luftverwirbelungen werden die sich im Streugut befindlichen Staubanteile mitgerissen und aufgewirbelt und legen sich auf Teilen des Schleuderstreuers und/oder des den Schleuderstreuer tragenden bzw. ziehenden Fahrzeuges ab.

Der Erfindung liegt die Aufgabe zugrunde, diesen Nachteil zu vermeiden, so dass sich möglichst wenige der Staubanteile des Streugutes auf Teilen des Schleuderstreuers oder des den Schleuderstreuer tragenden oder ziehenden Fahrzeugs niederschlagen.

Diese Aufgabe wird erfindungsgemäß durch das kennzeichnende Merkmal des Patentanspruches 1 gelöst. Infolge dieser Maßnahmen wird verhindert, dass beim Streuen von Streumaterial die entstehende Staubwolke feiner Staubanteile des auszubringenden Streugutes aufsteigt. Vielmehr werden die Staubanteile durch die Leitflächen und den von den Leitflächen erzeugten und in Richtung des Bodens gerichteten Luftströmungen gegen den Boden gedrückt. Die erfindungsgemäß angestellten Leitflächen, die das radiale Ende der Rückwand überragen, erzeugen einen gegen den Boden gerichteten Luftstrom, dieser erfasst die Staubanteile und drückt in Richtung des Bodens. Die das radiale Ende der Rückwand überragen den Leitflächen sind in radialer Fortsetzung der sich im Bereich der Rückwand befindlichen Leitflächen mit dem gleichen Winkel zur Horizontalen ausgerichtet.

Um in einfacher Weise die gegen den Boden gerichtete Luftströmung zum Erfassen der die Wurfflügel verlassenden Staubanteile zu erzeugen, ist erfindungsgemäß vorgesehen, dass der über das Ende der Rückwand des Wurfflügels in radialer Richtung hinausragende Bereich der Leitfläche als die Luft nach unten leitender Abweiser ausgebildet ist.

Um eine ausreichend gegen den Boden gerichtete Luftströmung durch die als Abweiser ausgebildeten Leitflächen zu erreichen, ist vorgesehen, dass die Abweiser mit einem Winkel zwischen 30° und 60° zur Horizontalen angestellt sind.

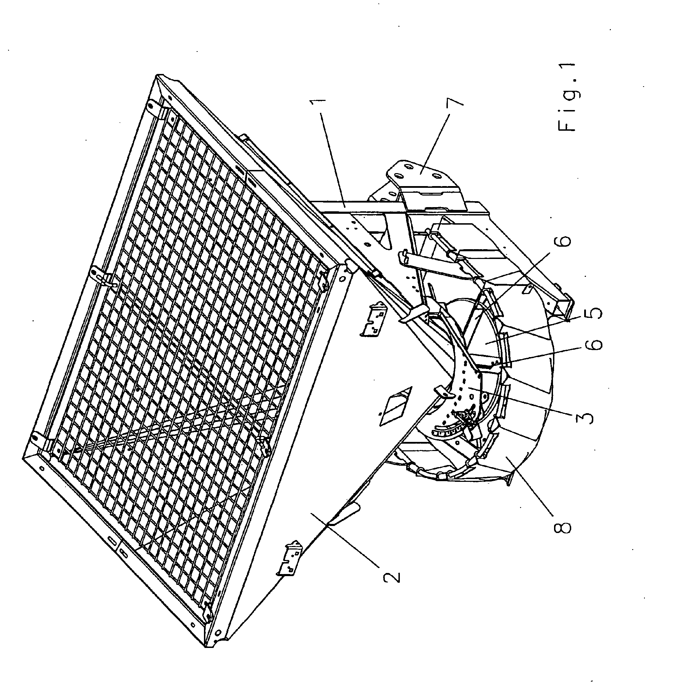

Weitere Einzelheiten der Erfindung sind der Beispielsbeschreibung und den Zeichnungen zu entnehmen. Hierbei zeigen
- Fig. 1: den Schleuderstreuer in perspektivischer Darstellung,

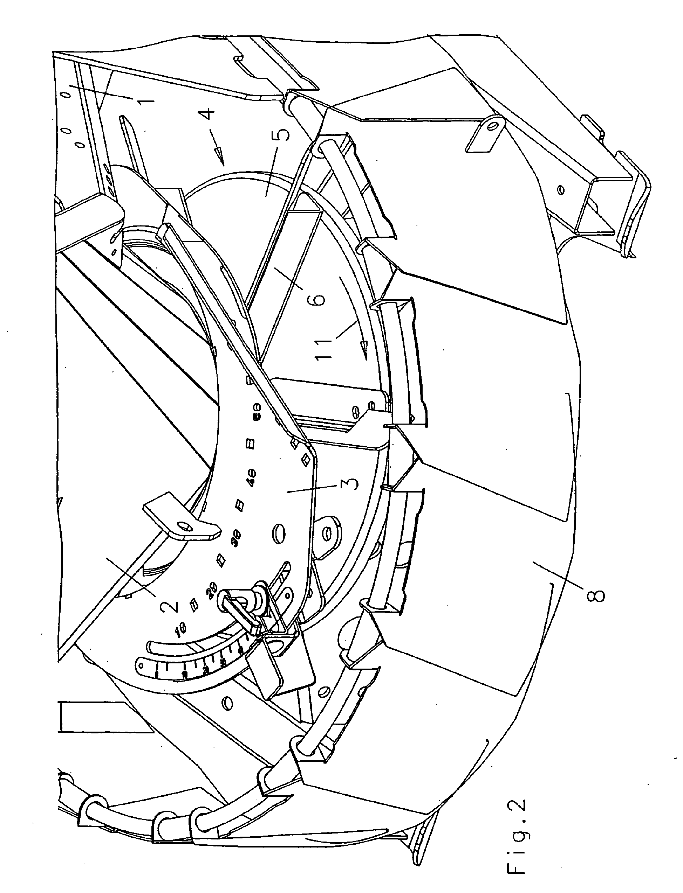

- Fig. 2: den Verteilbereich des Schleuderstreuers in vergrößertem Maßstab und in perspektivischer Darstellung,

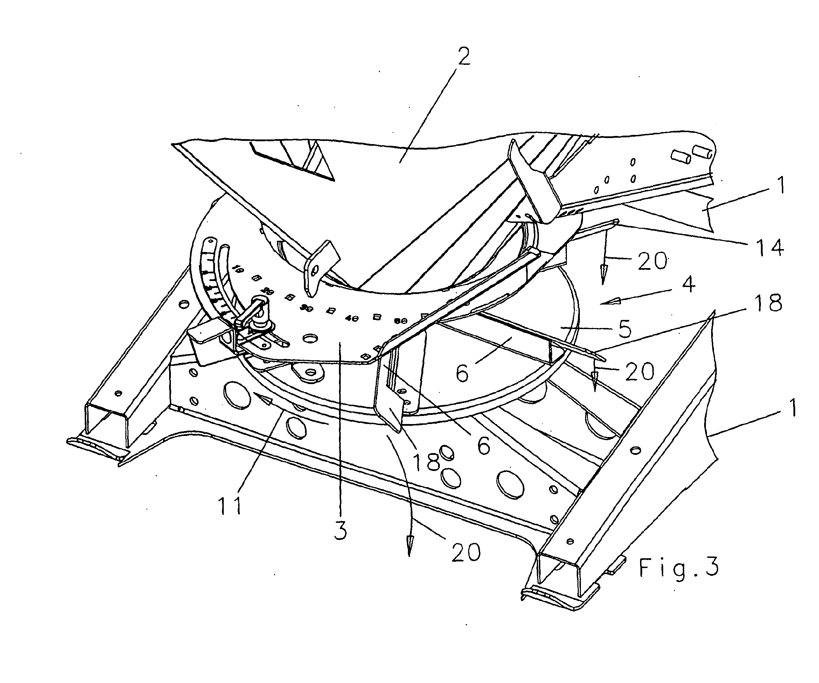

- Fig. 3: den Verteilbereich des Schleuderstreuers mit abgenommenen Streubreitenbegrenzung in perspektivischer Darstellung,
- Fig. 4: einen Wurfflügel in perspektivischer Darstellung,
- Fig. 5: den Wurfflügel gemäß Fig. 4 in der Ansicht von hinten, bezogen auf die Drehrichtung des Wurfflügels bzw. der Schleuderscheibe und
- Fig. 6: den Wurfflügel in der Ansicht VI - VI.

Der Schleuderstreuer weist den Rahmen 1, den Vorratsbehälter 2 mit wenigstens einem Auslauf mit Dosierorgan 3, aus dem das Streugut, welches sich im Vorratsbehälter 2 befindet, austritt. Unterhalb des Vorratsbehälters 2 und des Dosierorgans 3 ist ein umlaufend angetriebenes Verteilorgan 4 angeordnet. Das Verteilorgan 4 besteht aus einer um eine zum Auslauf versetzte Achse angetriebenen Schleuderscheibe 5 und auf dieser angeordneten und umlaufenden Wurfflügel 6. Der Schleuderstreuer weist auf seiner Vorderseite Kuppelelemente zum Anbau an Kupplungselemente 7 eines Fahrzeuges, beispielsweise eines Schleppers auf. Der Schleuderstreuer ist im Ausführungsbeispiel als Einscheibenstreuer ausgebildet und kann als Straßenstreuer zum Ausstreuen von Salz, Sand, Kies, Splitt etc. oder als Düngerstreuer zum Ausbringen von Dünger eingesetzt werden.

Um das Verteilorgan 4 herum ist auf der Rückseite und den beiden Seiten des Schleuderstreuers ein als Streuschirm 8 ausgebildete Streubreitenbegrenzung, welcher aus einzelnen zueinander bewegbaren lamellenartigen Segmenten besteht, angeordnet.

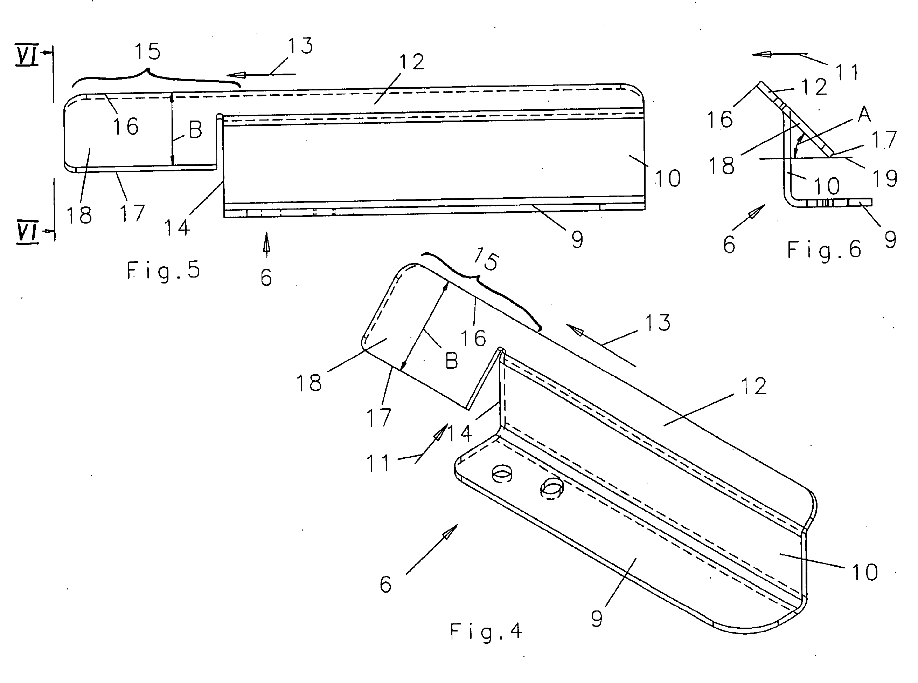

Die Wurfflügel 6 weisen einen Befestigungsbereich 9 auf, mit dem sie auf der Schleuderscheibe 5 mittels geeigneter Befestigungselemente, beispielsweise Schrauben befestigt sind. An dem Befestigungsbereich 9 des Wurfflügels 6 schließt sich eine in aufrechter Richtung erstreckende Rückwand 10 an. An der Oberkante der Rückwand 10 schließt sich die in Umlaufrichtung 11 des Verteilorgans 4 weisende Leitfläche 12 an, die im Ausführungsbeispiel in Drehrichtung 11 der Schleuderscheibe 5 bzw. Umlaufrichtung an die Rückwand 10 anschließend mit einem Winkel A von etwa 45° angekanntet ist. Die Leitfläche 12 ragt in radialer Richtung 13 über das radiale Ende 14 der Rückwand 10 hinaus, wie insbesondere die Fig. 4 und 5 zeigen. Der über das Ende 14 der Rückwand 10 des Wurfflügels 6 hinausragende Bereich 15 der Leitfläche 12 ist derart angestellt, dass die vordere Kante 16 der Leitfläche 12 höher als deren hintere Kante 17 angeordnet ist. Die über das Ende 14 der Rückwand 10 des Wurfflügels 6 in radialer Richtung 13 hinausragende Bereich 15 der Leitfläche 12 ist als die Luft nach unten leitender Abweiser 18 ausgebildet und mit einem Winkel A zwischen 30° und 60° zur Horizontalen 19 angestellt, wie insbesondere die Fig. 6 zeigt. Die über das Ende 14 der Rückwand 10 des Wurfflügels 6 in radialer Richtung 13 hinausragende Bereich 15 der Leitfläche 12, der den Abweiser bildet, kann eine größere Breite B in Umlaufrichtung 11 als die Leitfläche 12 im Bereich der Rückwand 10 des Wurfflügels 6 aufweisen, wie insbesondere die Fig. 4 bis 6 zeigen. Im Ausführungsbeispiel ist der über das radiale Ende 14 der Rückwand 10 hinausragende Bereich 15 der als Abweiser 18 ausgebildeten Leitfläche 12 entgegen der Drehrichtung 11 verbreitert. Es ist jedoch auch möglich, die als Abweiser 18 ausgebildete Leitfläche 14 in Drehrichtung 11 zu verbreitern.

Der in radialer Richtung 13 über das Ende der Rückwand 14 des Wurfflügels 6 hinausragende und als Abweiser 18ausgebildete Bereich 14 der Leitfläche 12 ist in radialer Richtung 13 gesehen mit dem gleichen Winkel B zur Horizontalen 19 wie die Leitfläche 12 im Bereich der Rückwand 10 angestellt.

Die Funktionsweise der die Rückwand 10 überragenden und als Abweiser 18 ausgebildeten Bereiches 14 der Leitfläche 12 ist folgende:

Das sich im Vorratsbehälter 2 befindliche Streumaterial wird über das Dosierorgan 3 der Schleuderscheibe 5 zugeleitet und von den Wurfflügeln 6 erfasst. Das Streumaterial wird von den Wurfschaufeln 6 in radialer Richtung 13 beschleunigt und am Ende 14 der Rückwand 10 der Wurfflügel 6 abgeworfen. Die Abweiser 18 erzeugen außerhalb der Schleuderscheiben 5 und der Rückwand 10 der Wurfflügel 6 eine nach unten und gegen den Boden gerichteten Luftströmung 20. Die sich im Streumaterial befindlichen Staubanteile werden von den Abweisern 18 und der von den Abweisern 18 erzeugten Luftströmung 20 erfasst und nach unten bzw. in Richtung 21 des Bodens abgeleitet, so dass die Staubanteile nicht aufsteigen. Somit wird verhindert, dass die Staubanteile sich auf Teile des Schleuderstreuers bzw. des den Schleuderstreuer tragenden Fahrzeuges ablagern.

## Patentansprüche

1. Schleuderstreuer für rieselfähiges Streugut, insbesondere Dünger und Streusalz, mit einem Vorratsbehälter (2) mit wenigstens einem Auslauf mit Dosierorgan (3), aus dem das Streugut austritt, und wenigstens einem umlaufenden Verteilorgan (4), das aus einer um eine zum Auslauf versetzte Achse angetriebenen Schleuderscheibe (5) und auf dieser angeordneten und umlaufenden Wurfflügel (6) besteht, wobei die Wurfflügel (6) jeweils eine sich in aufrechter Richtung erstreckende Rückwand (10) und eine sich an die Oberkante der Rückwand (10) anschließende und in Umlaufrichtung weisende Leitfläche (12) aufweisen, **dadurch gekennzeichnet, dass** die Leitfläche (12,15,18) zumindest einer der Wurfflügel (6) in radialer Richtung (13) über das radiale Ende (14) der Rückwand (10) hinaus ragt, dass der über das Ende (14) der Rückwand (10) hinausragende Bereich (15,18) der Leitfläche (12) derart angestellt ist, dass die vordere Kante (16) der Leitfläche (15,18) höher als deren hintere Kante (17) angeordnet ist.

2. Schleuderstreuer nach Anspruch 1, **dadurch gekennzeichnet, dass** der über das Ende (14) der Rückwand (10) des Wurfflügels (6) in radialer Richtung (13) hinausragende Bereich (15) der Leitfläche (12) als die Luft nach unten leitender Abweiser (18) ausgebildet ist.

3. Schleuderstreuer nach Anspruch 1, **dadurch gekennzeichnet, dass** der Abweiser (18) mit einem Winkel (B) zwischen 30° und 60° zur Horizontalen (19) angestellt ist.

## Claims

1. Centrifugal spreader for free-flowing spreading material, in particular fertiliser and de-icing salt , said centrifugal spreader having a hopper (2) with at least one outlet with metering member (3) from which the spreading material is discharged, and at least one rotating distributing member (4), which comprises a centrifugal disc (5) that is driven about an axis offset relative to the outlet and rotating throwing vanes (6) that are positioned on said centrifugal disc, wherein the throwing vanes (6) each have a rear wall (10) that extends in the upright direction and a deflecting face (12) that adjoins the upper edge of the rear wall (10) and faces in the direction of rotation, **characterized in that** the deflecting face (12, 15, 18) of at least one of the throwing vanes (6) protrudes beyond the radial end (14) of the rear wall (10) in the radial direction, that the region (15, 18) of the deflecting face (12) protruding beyond the end (14) of the rear wall (10) is set in such a manner that the front edge (16) of the deflecting face (15, 18) is positioned higher than its rear edge (17).

2. Centrifugal spreader according to Claim 1, **characterized in that** the region (15) of the deflecting face (12) protruding beyond the end (14) of the rear wall (10) of the throwing vane (6) in the radial direction is in the form of a deflector (18) that directs the air downwards.

3. Centrifugal spreader according to Claim 1, **characterized in that** the deflector (18) is set at an angle (β) between 30° and 60° relative to the horizontal (19).

## Revendications

1. Epandeur centrifuge pour engrais coulants en particulier du lisier et des sels de déneigement comportant :
- un réservoir (2) avec au moins une sortie munie d'un organe de dosage (3) par laquelle sort l'engrais et au moins un organe de distribution (4) rotatif qui se compose d'un disque d'épandage (5) entraîné axialement par rapport à la sortie et portant des ailettes d'éjection (6) entraînées en rotation. Chaque ailettes d'éjection (6) ayant une paroi arrière (10) et une surface de guidage (12) reliée à l'arête supérieure de la paroi arrière (10) et dirigée dans le sens de rotation,
**caractérisé en ce que**
dans la direction radiale (13) la surface de guidage (12, 15, 18) d'au moins l'une des ailettes d'éjection (6) dépasse de l'extrémité radiale (14) de la paroi arrière (10), de la zone (15, 18), de la surface de guidage (12) qui est réalisée de façon que l'arête avant (16) de la surface de guidage (15, 18) soit plus haute que son arête arrière (17).

2. Epandeur centrifuge selon la revendication 1,
**caractérisé en ce que**
la zone en saillie (15) de la surface de guidage (12) qui dépasse dans la direction radiale (13) de l'extrémité (14) de la paroi arrière (10) de l'ailette d'éjection constitue un déflecteur (18) dirigeant l'air vers le bas.

3. Epandeur centrifuge selon la revendication 1,
**caractérisé en ce que**
le déflecteur (18) est monté selon un angle (B) compris entre 30° et 60° par rapport à l'horizontale (19).
